# EUROPEAN PATENT SPECIFICATION

(11) **EP 0 835 296 B1**
(45) Date of publication and mention of the grant of the patent: **19.12.2007**
(21) Application number: 96923502.7
(22) Date of filing: 28.06.1996
(51) Int. Cl.: C09K 8/04, C09K 8/50, C08F 220/42

(54) **DRILLING COMPOSITIONS AND METHODS**
BOHRZUSAMMENSETZUNGEN UND METHODEN
COMPOSITIONS ET PROCEDES DE FORAGE

(30) Priority: 30.06.1995 US 724 P; 26.09.1995 US 4324 P; 11.12.1995 US 570623; 11.12.1995 US 8433 P; 11.12.1995 US 8486 P
(43) Date of publication of application: 15.04.1998
(73) Proprietor: HALLIBURTON ENERGY SERVICES, INC., Carrollton, TX 75006 (US)
(72) Inventor: DIGGS, David c/o Choate, Hall & Stewart, Boston, Massachusetts 02109-2891 (US); KEARNEY, Marie, Brighton, MA 02135 (US); TIMM, M., J., Acton, MA 01720 (US); LUPTON, E., C., Boston, MA 02114 (US); BROMBERG, Lev, Swamspcott, MA 01907 (US); STEIN, Mara, Nashua, New Hampshire 03062 (US); HAND, Barry, Acton, MA 01720 (US); ORKISZ, Michal, Brighton, MA 02135 (US)
(74) Representative: Wise, Stephen James
(86) International application number: PCT/US1996/011021
(87) International publication number: WO 1997/002330

(56) References cited:
- EP-A- 0 161 926
- EP-A- 0 226 097
- EP-A- 0 505 201
- WO-A-93/15164
- GB-A- 2 128 659

## Description

This application claims benefit of priority of provisional application serial number 60/000,724, filed June 30, 1995, entitled, "Reversible Drilling Materials for Divalent Clear Drilling Fluids"; provisional application serial number 60/004,324, filed September 26, 1995, entitled "Reversible Drilling Materials for Divalent Clear Drilling Fluids"; U.S. serial number 08/570,623, filed December 11, 1995, entitled "Drilling Compositions and Methods"; provisional application serial number 60/008,433, filed December 11, 1995, entitled "Drilling Compositions and Methods"; and provisional application serial number 60/008,486, filed December 11, 1995, entitled "Gel Fluid Loss Control System for Drilling Applications".

### Background of the Invention

This invention relates to drilling compositions and methods, and more particularly to drilling compositions useful in hydrocarbon well drilling operations which change from a more hydrated condition to a less hydrated condition in response to a change in an environmental condition.

During drilling of a well such as a well for extracting hydrocarbons, fluids are pumped into the well. Different fluids are used during different stages of the drilling operation. At one stage, fluids known as drilling and drill-in fluids are used. Such fluids serve several purposes such as cooling and lubricating the drill bit, and transporting solids to the surface. Another important function of the drilling fluid is to balance the hydrostatic pressures encountered as the well is drilled. A condition called "blow-out" will occur if the pressure in an underground formation is greater than that provided by the fluid. In order to balance the pressures encountered in deep wells, fluids denser than water are typically required. One technique for increasing density is to create a brine or saturated salt solution which increases density up to 18 pounds per gallon.

To assure that a blow-out does not occur, the well is drilled in an over-balanced state, the pressure of the drilling fluid being higher than that encountered in the formation. Such over-balanced drilling, however, will cause the drilling fluid to infiltrate into the stratum which will damage the formation and greatly impair the ability to recover material from the well once production begins. Therefore, in the prior art, drilling fluids often include solids known as bridging agents to serve as a barrier to prevent the drilling fluid from infiltrating into the formation pore spaces and thereby damaging the formation. One prior art technique is to suspend salt crystals in an already saturated salt or brine solution to bridge the formation pore spaces to prevent formation damage. See, U.S. Patent Nos. 4,186,803; 3,785,438; 3,878,141; 4,175,042; 4,369,843; and 4,822,500. Prior art bridging agents temporarily bridge over the formation pores rather than permanently plugging the pores. These bridging agents are dissolved when the workover or completion operation is accomplished to allow production from the well. A suspension agent is required to suspend the salt crystals but prior art suspension agents such as xanthan gum work only in monovalent ion solutions such as sodium chloride and sodium bromide. Divalent ion solutions such as CaCl₂ and CaBr₂ have distinct advantages over the monovalent ion solutions, such as NaCl and NaBr. For example, a CaCl₂ solution can be made much denser than a NaCl solution while maintaining a solids-free fluid. Further, the CaCl₂ is substantially cheaper than the NaBr at the same densities. The use of CaBr₂ raises the maximum density to 14.3 Ibs/gallon while maintaining a solids-free fluid. A drilling fluid that uses these brines as a base fluid has long been sought, but there has been no material that could be added that would have the necessary fluid-loss control and could be easily cleaned from the well.

### Summary of the Invention

The following terms are used herein and are defined as follows. A polymer is a long chain molecule with high molecular weight from a sizeable number of repeat units. A crosslinked polymer is a polymer which contains crosslinking units joining the primary backbones of the polymer. A gel is a crosslinked polymer which is swollen with a significant quantity of fluid.

The invention, in a first aspect, is a copolymer comprising a first monomer whose homopolymer is hydrophobic but soluble in ionic solutions and a second monomer, optionally with a third monomer, both of whose homopolymers are hydrophilic tending to swell in water. In one embodiment, the first monomer is a nitrile containing compound having a double or triple bond capable of being polymerized and wherein the second and third monomers independently comprise acrylamides, substituted acrylamides or hydroxyacrylates having a double bond, triple bond or other functionality which can be polymerized. The first monomer may be selected from the group comprising acrylonitrile, methacrylonitrile, maleonitrile and fumaronitrile. The second and third monomers may be independently selected from the group comprising acrylamide, methyl acrylamide, dimethyl acrylamide, ethyl acrylamide, 2-hydroxyethyl acrylate, hydroxypropyl acrylate and hydroxyethylmethyl acrylate,

In another aspect, the invention is a non-polyampholite crosslinked polymer which polymer in uncrosslinked form is substantially soluble in ionic fluids and substantially insoluble in water. A polyampholite polymer is a polymer whose polymeric backbone contains, or pendant groups from the polymeric backbone contain (in either ionized or neutral form) in substantial mole percentage both anionic groups, such as carboxylic acid or sulfonic acid and cationic groups such as quaternary ammonium groups. A crosslinked polyampholite polymer is a polyampholite polymer which contains cross-linking joining the primary polymer backbones. A polyampholite gel is a crosslinked polyampholite polymer which is swollen with a significant quantity of fluid. We have determined that the polyampholite gels described in the prior art (X. Yu, Ph.D. Thesis submitted to the Department of Physics, Mass. Inst. of Tech. 1993) would not be useful for this application because they are too swollen in pure water or in dilute salt solutions (they do not collapse sufficiently) and because, although they expand in more concentrated salt solution relative to more dilute solutions, the degree of exapnsion is relatively small. In one embodiment, the non-polyampholite crosslinked polymer includes a monomer which forms a hydrophobic homopolymer and one or two monomers which form a hydrophilic homopolymer which polymer in uncrosslinked form will be substantially soluble in ionic fluids and substantially insoluble in water. In this embodiment, the crosslinked polymer includes a first monomer which is a nitrile containing compound having a double or triple bond capable of being polymerized and wherein the second and third monomers independently comprise acrylamides, substituted acrylamides or hydroxy acrylates having a double bond, triple bond or other functionality which can be polymerized.

In yet another aspect, the invention is a gel comprising a non-polyampholite crosslinked polymer which polymer in uncrosslinked form is substantially soluble in ionic fluids and substantially insoluble in water, the crosslinked polymer being hydrated with an ionic fluid. In one embodiment, this gel comprises a monomer which forms a hydrophobic homopolymer and one or two monomers which form a hydrophilic homopolymer, the gel being hydrated with an ionic fluid. The monomer which forms a hydrophobic homopolymer may be a nitrile containing compound which contains a double or triple bond capable of being polymerized and wherein the hydrophilic monomers comprise acrylamides, substituted acrylamides or hydroxyacrylates having a double bond, triple bond or other functionality which can be polymerized. Suitable monomers are set forth above. The resulting material is soluble in ionic fluids such as calcium chloride but insoluble in water.

As used in this specification, an ionic fluid is an aqueous solution containing one or more of the following salts: NaCl, NaBr, CaCl₂, CaBr₂, ZnCl₂, ZnBr₂, RbCl, RbBr, CsCl, CsBr, Cs formate, Rb formate, K formate, Na formate, KBr, KCl, NH₄Cl, NH₄Br. A concentrated ionic fluid here is meant an ionic fluid which has a concentration greater than 6% dissolved salts be weight. An ionic fluid may, in addition, contain particulate material.

In one embodiment, the ionic fluid is a solution of a divalent cation such as calcium, magnesium or zinc. A suitable salt is selected from the group comprising calcium chloride and calcium bromide. In another embodiment, the aqueous salt solution is a solution of a monovalent cation. Suitable monovalent cationic systems are NaCl and NaBr. Other suitable cationic systems include zinc, magnesium and potassium. In a preferred embodiment, the gel includes a crosslinked polymer of a first nitrile containing monomer and a second monomer selected from the group comprising acrylamides, substituted acrylamides and hydroxyacrylates, the crosslinked polymer hydrated with an aqueous solution of calcium ions such as a solution of calcium chloride or calcium bromide. One suitable hydrated gel is selected to become dehydrated in water or in a dilute ionic third such as dilute sodium chloride, potassium chloride or dilute ammonium chloride. In yet another more general aspect of the invention, a crosslinked polymer hydrated with an ionic aqueous solution is selected to become less hydrated upon exposure to an environmental condition. Suitable environmental conditions are temperature, pH, solvent, solvent concentration, ions, ionic concentration, electric field, magnetic field and pressure. These hydrated gels are effective drilling fluids.

In yet another aspect, the invention is a method for blocking and unblocking pores of an underground stratum such as an oil-bearing formation. The method includes introducing a gel hydrated in particulate form serving as a treating fluid in a drilling, well completion or workover operation into the stratum to block or bridge the pores and exposing the gel to an environmental condition selected to lower the state of hydration of the gel, whereby the gel decreases in volume and unblocks the pores. Suitable gels comprise a crosslinked polymer other than a polyampholite polymer which polymer in uncrosslinked form is substantially soluble in ionic fluids and substantially insoluble in water, the crosslinked polymer being hydrated with an ionic fluid.

In yet another aspect of the invention, a method for drilling, well completion or workover includes introducing a gel in particulate form hydrated with an ionic fluid into a subterranean formation and thereafter exposing the gel to an environmental condition selected to lower the state of hydration of the gel, whereby the gel decreases in volume to increase permeability of the well. Suitable gels are those set forth above. Suitable ionic fluids are solutions of ions such as calcium, magnesium, sodium or zinc. Preferred solutions are solutions of calcium chloride, calcium bromide and zinc chloride. A suitable trigger for decreasing the state of hydration of the fluid is exposing the fluid to water, a dilute saline solution, a dilute ammonium chloride solution or potassium chloride solution typically 3 wt. %.

The gels of the invention hydrated, for example, with calcium chloride, have a suitable density for preventing blow-out in a well. Further, the hydrated gel will block or bridge the pores in a formation without allowing substantial amounts of the fluid to penetrate into the formation which would damage it. Upon exposure to an environmental condition such as contact with water or a dilute sodium or potassium chloride solution, the gel becomes less hydrated and shrinks in volume to unblock the pores to allow fluids in the stratum to be produced. When the stratum is a hydrocarbon bearing formation, the hydrocarbon will flow into the well for recovery.

Because the fluids of the present invention are capable of utilizing calcium compounds, these fluids are more economical than monovalent ionic solutions such as sodium chloride and sodium bromide utilized in the prior art drilling fluids to increase density. Further, the materials of the invention are "clear" meaning that they do not include any solid materials such as calcium carbonate. It should also be noted that zinc chloride or zinc bromide, more expensive than calcium chloride or calcium bromide, can be used with the materials of the invention and allows for heavier fluids to be made for use in deeper wells where pressures are higher.

### Brief Description of the Drawing

Fig. 1 is a phase diagram of the acrylonitrile, acrylamide, 2-hydroxy acrylate system.
Fig. 2 is a cross-sectional view of a drilling rig and well.

### Description of the Preferred Embodiments

The polymers, crosslinked polymers and gels of the invention, sometimes referred to as Engineered Response^{™} materials, reversibly undergo a change from primarily hydrophilic to primarily hydrophobic in response to an environmental condition or trigger such as temperature, pH, solvent (such as hydrocarbons), solvent concentration, ions or ionic concentration, electric fields, magnetic fields or pressure. Materials and gels which exhibit such changes are known in the art. See, for example, Tanaka, Physical Review Letters, Vol. 40, No. 12, pp. 820-823 (1978); Tanaka, Physical Review Letters, Vol. 38, No. 14, pp. 771-774 (1978); Tanaka et al., Physical Review Letters 5, Vol. 45, p. 1636 (1980); Ilavsky, Macromolecules, Vol. 15, p. 782 (1982); Hrouz et al., Europ. Polymer J., Vol. 17, p. 361 (1981); Ohmine et al., J. Chem. Phys., Vol. 8, p. 6379 (1984); Tanaka et al., Science, Vol. 218, p. 462 (1982); Ilavsky et al., Polymer Bull., Vol. 7, p. 107 (1982); Gehrke, Responsive Gels: Volume Transitions II; ed. K. Dusek, Springer-Verlag, New York, pp. 81-114 (1993); Li et al., Ann. Rev. Mat. Sci., 22; 243-277 (1992); Galaev et al., Enzyme Microb. Technol., 15, 354-366 (1993); Taylor et al., J. Polymer Sci., Vol. 13, 2551-2570 (1975); U.S. Patent No. RE35,068; and U.S. Patent Application serial number 08/393,971 filed February 24, 1995, entitled "Electromagnetically Triggered Responsive Gel Based Drug Delivery Device".

The change from hydrophilic to hydrophobic character may be evidenced by a decrease in transmission of light (cloud point), change in viscosity or swelling or collapse. If a responsive polymer undergoes change in response to a change in temperature, it is a "thermally responsive polymer" or a "temperature responsive polymer." If the responsive polymer undergoes the change in response to a change in pH, it is a "pH responsive polymer." The change in environmental condition which causes the hydrophobic/hydrophilic change is called a "trigger." When an engineered response polymer or a "responsive polymer" is crosslinked to form a gel, the resulting material is designated an engineered response gel or a "responsive gel."

In one important aspect of the invention, the properties of engineered response or phase transition gels and/or polymers form a system in which the gels and/or polymers will swell and block or bridge the pores of an underground hydrocarbon bearing stratum structure and then be triggered to change the state of hydration (solvation) of the gel or polymer to unblock the pores. A suitable trigger is the ionic strength of fluid to which the gel is exposed. Suitable materials will expand in a high concentration of ions (high ionic strength) and collapse in a lower concentration of ions (lower ionic strength). An example is a material which will swell in the presence of concentrated calcium ions, such as are found in concentrated solutions of calcium chloride and/or calcium bromide (CaCl₂ or CaBr₂) and collapse in the presence of water or of a dilute solution of ions such as a solution of ammonium chloride or potassium chloride (NH₄Cl or KCl).

The responsive gels or polymers of the invention are made by creating a copolymer or terpolymer which will have the necessary responsive properties. The materials of the invention may be made from a first monomer whose homopolymer is hydrophobic (tends to collapse in water), but which will tend to wet, dissolve and/or expand in ionic solutions, particularly solutions of ions such as calcium, magnesium and zinc. Examples of such monomers are acrylonitrile, methacrylonitrile, maleonitrile, fumaronitrile or other nitrile containing monomers which contain a double or triple bond which can be polymerized.

A second monomer is one whose homopolymer is hydrophilic and will cause the gel or polymer to tend to swell in water giving it the pore bridging capability and necessary swelling capability in calcium chloride solution. Examples of suitable second monomers are acrylamides and substituted acrylamides, such as acrylamide, methyl acrylamide, dimethyl acrylamide and ethyl acrylamide; hydroxyacrylates such as 2-hydroxyethyl acrylate, hydroxypropyl acrylate and hydroxyethylmethyl acrylate; and vinyl lactams such as vinyl pyrrolidinone. All of these materials contain a double bond, triple bond or other functionality which can be polymerized. The synthesis methodology plays an important role in the material's ability to seal the formation. The material must be synthesized in a particle form in a controlled environment for it to be effective. Synthesizing the material in a bulk methodology results in a rubbery mass that is difficult to process to the correct size. The lack of good heat transfer also creates a very heterogeneous structure which adds to the material's inability to be processed to the correct size. A more preferable methodology would be one in which the gel is synthesized in particles of the correct size and has good heat transfer characteristics to provide a controlled reaction environment. That preferred methodology is inverse suspension polymerization. A water solution of the polymer precursor is added to an oil phase and agitated. The agitation yields small particles, between 10 and 1000 µm, which upon reaction will remain as discrete particles even after the removal of agitation. The discrete particles are added to a brine solution. The particles will swell in the brine solution and form a homogeneous solution.

The design of a polymer or gel useful in the present invention involves synthesizing a material which is a copolymer or terpolymer of the first monomer type and one or more monomers of the second monomer type so that the hydrophobic and hydrophilic tendencies are balanced and the material will swell in concentrated calcium chloride or calcium bromide solution and collapse in water or in dilute sodium chloride or potassium chloride solution. It is possible to synthesize the materials of the invention utilizing one monomer of the first type as listed above and allowing all or part of this monomer to react to form a material of the second monomer type. An example is the reaction of acrylonitrle with water to hydrolyze and form acrylamide. It is also contemplated that the monomers of the first and second type will comprise a block or graft copolymer form so that the arrangement of the first monomer and second monomer in the polymer or gel is not random.

In a preferred embodiment, the polymer comprises approximately 35mol% to 55mol% of the first monomer type, approximately 5mol% to 25mol% of a monomer of the second monomer type and approximately 30mol% to 50mol% of a different monomer of the second monomer type. The polymer is in uncrosslinked form and is substantially soluble in ionic fluids and substantially insoluble in water. The most preferred first monomer is acrylonitrile, the most preferred second monomer acrylamide and the most preferred third monomer 2-hydroxyethyl acetate. The polymer can also be crosslinked or hydrated to form a gel.

### Examples

### Example 1: Synthesis of Acrylonitrile/2-Hydroxyethyl Acrylate Gels in CaBr₂/ZnCl₂.

650 grams of calcium bromide hydrate (Aldrich, 98%) is added to 500 ml of DI (deionized) water and allowed to dissolve. 90 ml of this solution is placed in an Erlenmeyer flask. 1583 grams of zinc chloride (Aldrich, 98%, A.C.S. reagent) is added to 500 ml of DI water and allowed to dissolve. Ten ml of this solution is added to the 90 ml of CaBr₂ solution in the Erlenmeyer. 3.6956 grams (4.59 ml) of acrylonitrile (Aldrich, 99%), 8.0878 grams (8.00 ml) of 2 - hydroxyethyl acrylate (Aldrich, 96%) and 0.1498 grams (0.144 ml) of diethylene glycol diacrylate (Monomer-Polymer & Dajac Laboratories, Catalogue No. 7945) are added to the 100 ml of CaBr₂/ZnCl₂ solution. The flask is sealed with a rubber stopper and N₂ is bubbled through the solution for 30 minutes. In a 20 dram glass vial, 0.144 grams of VA-086 (Wako Chemicals USA, Inc.) is added to 10 ml of DI water and allowed to dissolve. The VA-086 serves as an initiator. Using a syringe, 5 ml of the VA-086 solution is added to the flask containing the reactants. The flask is swirled until well mixed and placed in an oven at 80° C overnight to allow the gel to form.

### Example 2: Synthesis of Acrylonitrile/2-Hydroxyethyl Acrylate Gels in CaBr₂.

650 grams of calcium bromide hydrate (Aldrich, 98%) is added to 500 ml of DI water and allowed to dissolve. 100 ml of this solution is placed in an Erlenmeyer flask. 3.6956 grams (4.59 ml) of acrylonitrile (Aldrich, 99%), 8.0878 grams (8.00 ml) of 2-hydroxyethyl acrylate (Aldrich, 96%), and 0.1498 grams (0.144 ml) of diethylene glycol diacrylate (Monomer-Polymer & Dajac Laboratories, Catalogue No. 7945) are added to the 100 ml of CaBr₂ solution. The flask is sealed with a rubber stopper and N₂ is bubbled through the solution for 30 minutes. In a 20 dram glass vial, 0.144 grams of VA-086 is added to 10 ml of DI water and allowed to dissolve. Using a syringe, 5 ml of the VA-086 solution is added to the flask containing the reactants. The flask is swirled until well mixed and placed in an oven at 80° C overnight to allow the gel to form.

### Example 3: Synthesis of Acrylonitrile/Acrylamide/2-Hydroxyethyl Acrylate Gels.

650 grams of calcium bromide hydrate (Aldrich, 98%) is added to 500 ml of DI water and allowed to dissolve. 100 ml of this solution is placed in an Erlenmeyer flask. 2.9565 grams (3.67 ml) of acrylonitrile (Aldrich, 99%), 1.9803 grams of acrylamide (Aldrich, 99%), 6.4702 grams (6.40 ml) of 2-hydroxyethyl acrylate (Aldrich, 96%), and 0.1498 grams (0.144 ml) of diethylene glycol diacrylate (Monomer-Polymer & Dajac Laboratories, Catalogue No. 7945) are added to the 100 ml of CaBr₂ solution. Heat may be necessary to dissolve the acrylamide in the CaBr₂ solution. The flask is sealed with a rubber stopper and N₂ is bubbled through the solution for 30 minutes. In a 20 dram glass vial, 0.144 grams of VA-086 is added to 10 ml of DI water and allowed to dissolve. Using a syringe, 5 ml of the VA-086 solution is added to the flask containing the reactants. The flask is swirled until well mixed and placed in an oven at 80° C overnight to allow the gel to form.

### Example 4: Testing of Acrylonitrile/2-Hydroxyethyl Acrylate Gels.

400 grams of CaCl₂ (Aldrich Catalogue No. 22,231-3) is added to 600 ml of DI water and allowed to dissolve and cool. The terpolymer gel synthesized in Example 2 is removed from the flask and added to 400 ml of the CaCl₂ solution. The mixture is allowed to swell for 24 hours and then homogenized (Arde-Barinco Inc., CJ-4 16" Laboratory Mixer) for 5 minutes on the "up" mode at 40% motor RPM. Using the Permeability Plugging Apparatus (PPA, Fann Instrument Company, Part No. 382020001) the gel mixture is tested using a 10 µm ceramic filter. The test consists of adding approximately 300 ml of the mixture to the cell unit, sealing the cell, placing it into the heating jacket, applying 6.9 bar (100 psi) of back pressure using N₂, heating to the desired testing temperature, and applying 34.5 bar (500 psi) of hydraulic pressure (procedure for testing found in the Fann PPA manual). The amount of filtrate that penetrates through the ceramic disc in 30 minutes is the test result. The test showed 18 ml over the required 30 minutes at a temperature of 93°C (200° F) Using the same disc, the cell is further heated to 121°C (250° F) and 45 ml of filtrate penetrated in 2 minutes.

### Example 5: Testing of Acrylonitrile/Acrylamide/2-Hydroxyethyl Acrylate Gels.

400 grams of CaCl₂ (Aldrich Catalogue No. 22,231-3) is added to 600 ml of DI water and allowed to dissolve and cool. The terpolymer gel synthesized in Example 2 is removed from the flask and added to 400 ml of the CaCl₂ solution. The mixture is allowed to swell for 24 hours and then homogenized (Arde-Barinco Inc., CJ-4 16" Laboratory Mixer) for 5 minutes on the "up" mode at 40% motor RPM. Using the Permeability Plugging Apparatus (PPA, Fann Instrument Company, Part No. 382020001) the gel mixture is tested using a 10 *µ*m ceramic filter. The test consists of adding approximately 300 ml of the mixture to the cell unit, sealing the cell, placing it into the heating jacket, applying 6.9 bar (100 psi) of back pressure using N₂, heating to the desired testing temperature, and applying 34.5 bar (500 psi) of hydraulic pressure (procedure for testing found in the Fann PPA manual). The amount of filtrate that penetrates through the ceramic disc in 30 minutes is the test result. The test showed 15 ml over the required 30 minutes at a temperature of 93°C (200 °F). Using the same disc, the cell is further heated to 121°C (250° F) and 6 ml of filtrate penetrated in 30 minutes. At 149°C (300 °F), 11 ml of filtrate penetrated in 10 minutes. To test reversibility of the material, the material is tested on an API filter press (Fann Instrument Company, Part No. 30200). Approximately 200 ml of mixture is placed in the cell and a pressure of 6.9 bar (100 psi) is applied, using N₂ gas, for ten minutes to assure that a block is achieved with a ten micron disc. The excess mixture is then removed and approximately 300 ml of 3% potassium chloride (also may use 3% ammonium chloride) is added. The amount of filtrate that penetrates through the disc in a designated time frame is the reverse test result. The test showed 150 ml of filtrate over 6 minutes.

### Example 6: Synthesis of Acrylonitrile/Acrlamide/2-Hydroxyethyl Acrylate Gels.

250 ml of a warm 1.70 kg/litre (14.2 lbs/gallon) Calcium Bromide solution (Baroid Drilling Fluids) is placed in an Erlenmeyer flask. 4.938 grams of acrylamide (Aldrich, 99%) is allowed to dissolve. This solution is then placed in a sep funnel and 7.7457 grams (9.61 ml) of acrylonitrile (Aldrich, 99%), 16.135 grams (15.96 ml) of 2-hydroxyethyl acrylate (Aldrich, 96%), and 0.5618 grams (0.540 ml) of diethylene glycol diacrylate (Monomer-Polymer & Dajac Laboratories, Catalogue No. 7945) are added. N₂ is bubbled through the solution for 30 minutes. In a 40 dram glass vial, 0.378 grams of V-50 Azo initiator (Wako Chemicals USA, Inc.) is added to 28 ml of DI water and allowed to dissolve. 12.5 ml of the V-50 solution is then added to the calcium bromide solution and the solution is degassed for an additional 15 minutes. In a 500 ml baffled three necked reaction vessel, 400 ml of Norpar-12 (Exxon), with .75 g of Span 80 (sorbitan monooleate, ICI Americas, Inc.), is degassed for 45 minutes, while the norpar is being stirred with a six bladed R100 impeller, at 560 RPM. The calcium bromide solution is then added to the norpar solution, which is still being stirred, and the reaction runs for 15-18 hours, at approximately 70° C.

### Example 7: Testing of Acrylonitrile/Acrylamide/2-Hydroxyethyl Acrylate Gels.

The terpolymer beads synthesized in Example 6 are removed from the suspension vessel and centrifuged at 3/4 speed on a IEC HN-SII centrifuge for 30 minutes. The norpar is decanted off and the beads removed. Approximately 190 g of beads are added to 556 g of the CaCl₂ solution (11.6 lbs/gallon from Baroid Drilling Fluids, Inc.). The mixture is allowed to swell for 16 hours, stirring with an A-310 impeller at 500-600 rpm. Using the Permeability Plugging Apparatus (PPA, Fann Instrument Company, Part No. 382020001) the gel mixture is tested using a 10 *µ*m ceramic filter. The test consists of adding approximately 350 ml of the mixture to the cell unit, sealing the cell, placing it into the heating jacket, applying 6.9 bar (100 psi) of back pressure using N₂, heating to the desired testing temperature, and applying 34.5 bar (500 psi) of hydraulic pressure (procedure for testing found in the Fann PPA manual). The amount of filtrate that penetrates through the ceramic disc in 30 minutes is the test result. The test showed 2.5 ml over the required 30 minutes at a temperature of 121°C (250) F.

To test reversibility of this material, it is diluted with DI water, using a 1:5 ratio. The material dehydrates, turning white. The collapsed material no longer is suspended in solution.

When zinc chloride (ZnCl₂) solution alone is present, the homopolymer polyacrylonitrile (PAN) demonstrates the desired properties of blocking a porus medium and then dehydrating in water. It is noted that PAN is soluble in ZnCl₂ but not in water. The PAN gel prevented ZnCl₂ solution from passing through a filter by effectively blocking the pores of the filter. When water was added, the gel collapsed, unblocking the pores and allowed water to pass through the filter.

There are, however, cost, corrosivity and environmental concerns connected with zinc chloride solutions. A drilling solvent which addressed these concerns is a solution of CaCl₂ and CaBr₂ in water. We have observed that the homopolymer PAN is not soluble in either of these. If enough ZnCl₂ is added to the solvent, PAN will become soluble as shown in Example 1. To eliminate the need for zinc, a copolymer of acrylonitrile was synthesized and tested. If the correct comonomer is chosen, the solubility of the copolymer in the CaCl₂ or CaBr₂ solution is achieved while preserving the lack of solubility of the copolymer in water. See examples 2 and 4 above. This property has been demonstrated with acrylamide, 2-hydroxyethyl acrylate, hydroxypropyl acrylate, hydroxyethylmethyl acrylate, dimethyl acrylamide and vinyl pyrrolidinone. Any hydrophilic monomer of which the polymer is soluble in CaCl₂ or CaBr₂ would be suitable if synthesized in correct ratio with the acrylonitrile and if the resulting polymer has a necessary performance and is thermally stable and otherwise suitable for use in the intended application.

It has been found that the desired performance can be achieved and enhanced by adding a third monomer to the polymer backbone to form a terpolymer. This often increases operating temperature range while preserving the reversing capability of the material. A terpolymer may be synthesized out of two monomers of the second type discussed above and one monomer of the first type listed above and would have the desired properties. The acrylonitrile provides the reversibility in water or low ionic strength solvents (3 wt% KCl), while the other monomers supply the solubility in CaCl₂ or CaBr₂ for example. There is no reason to believe that it would not be possible to add more hydrophilic monomers to polymerize with acrylonitrile to achieve the desired effects. See, examples 3 and 5.

From the experiments set forth above, certain conclusions can be drawn. The hydration state of the polymer has a direct effect on its filtration properties which are important in preventing damage to an oil-bearing formation, for example. Therefore, if one can control the hydration state of the gel, one can control the filtration properties of the gel. The hydration properties of the gel can be modified by copolymerizing monomers with different hydrophobic/hydrophilic characteristics. By adjusting the ratio of the monomers, one can radically affect the solubility in related solvents like water and concentrated salt solutions. The materials of the invention enable the use of CaCl₂/CaBr₂ in production zone drilling.

The materials of the invention can also be made by modifying an acrylonitrile gel. By hydrolyzing portions of an acrylonitrile gel one can achieve the same effect as copolymerizing the two monomers together. The copolymerization is simpler on the lab scale but a post-treatment on the commercial scale may be more economical. As discussed above, a suitable trigger to remove the blocking material will be water or another solution in which the gel has been designed to collapse such as dilute sodium chloride or potassium chloride.

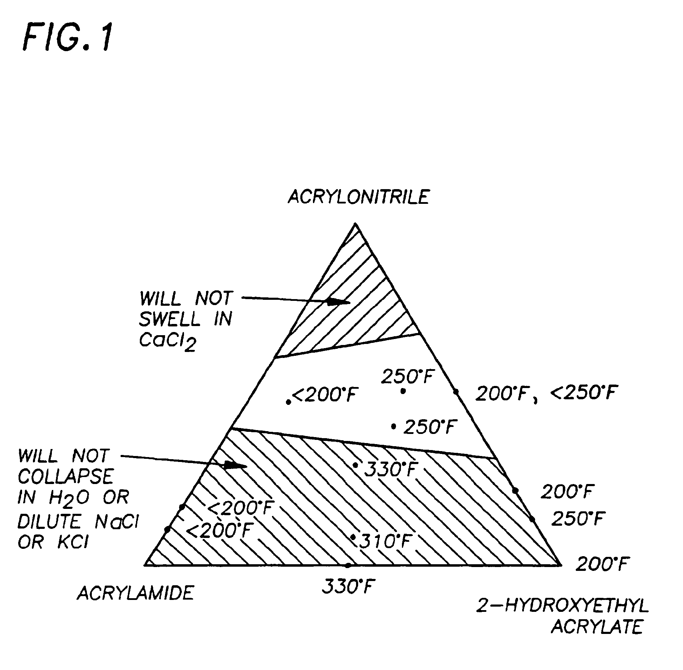

The phase diagram of Fig. 1 delineates some conclusions in the acrylonitrile, acrylamide, 2-hydroxyethyl acrylate (AN/AAm/HEA) system. The phase diagram of Fig. 1 is exemplary only in illustrating a way of selecting proportions of the monomers in making a suitable terpolymer. The section near the top vertex represents a region in which the gels do not swell in calcium chloride. The lower segment which contains the AAm and HEA vertices represents the region in which the gels will not collapse in water or dilute saline. The numerical values in Fig. 1 represent maximum measured Fahrenheit temperature at which the gel will hold back fluid in testing. In Fig. 1, optimal materials illustrated by the phase diagram are in the range of 40% AN/20% AAm/40% HEA and 50% AN/10% AAm/40% HEA. Suitable compositions are between 35% and 55% AN, between 5% and 25% AAm and between 30% and 50% HEA. The characteristics of a number of gel combinations are shown in Table 1.

**Table 1**

| Sample No. | AN/AMIDE/HEA Ratio | Syn. Solvent | Pressure/Temp | ml/min | Reversibility |
|---|---|---|---|---|---|
| 1 | 0/0/100 | water | (500, 200°F) 34.5 bar, 93°C | 48 ml/30 min. | does not reverse |
| 2 | 10/0/90 | water | (500, 250° F) 34.5 bar, 121°C | .8 ml/10 min. | does not reverse |
| 3 | 15/0/85 | | (500,200° F) 34.5 bar, 93°C | 21.5 ml/30 min. | does not reverse |
| 4 | 50/0/50 | CaBr₂ | (500,200° F) 34.5 bar, 93°C | 18 ml/30 min. | reverses |
| | '" | | (500, 250° F) 34.5 bar, 121 °C | 45 ml/30 min. | |
| 5 | 0/50/50 | water | (500, 200° F) 34.5 bar, 93°C. | 12 ml/30 min. | does not reverse |
| | '" | | (500, 250° F) 34.5 bar, 121°C | 6 ml/30 min. | |
| | '" | | (500, 330° F) 34.5 bar, 166 °C | 50 ml/5 min. | |
| 6 | 10/90/0 | water | (500,200° F) 34.5 bar, 93°C | 97 ml/4 min. | does not reverse |
| 7 | 15/85/0 | water | (500,200° F) 34.5 bar, 93°C | 88 ml/4 min. | does not reverse |
| 8 | 10/45/45 | water | (500,200° F) 34.5 bar, 93 °C | 8 ml/30 min. | does not reverse |
| | | | (500, 250° F) 34.5 bar, 121 °C min. | .8 ml/10 | |
| | | | (500, 300° F) 34.5 bar, 149°C | 2.7 ml/10 min. | |
| | " | | (500, 330° F) 34.5 bar, 166°C | 7.5 ml/10 min. | |
| 9 | 50/10/40 (.5% XL) | CaBr₂ | (500, 200° F) 34.5 bar, 93°C | 10 ml/30 min. | reverses |
| | '" | | (500, 250' F) 34.5 bar, 121°C | 25 ml/10 min. | |
| 10 | 50/10/40 (1% XL) | CaBr₂ | (500, 200° F) 34.5 bar, 93°C | 49 ml/30 min. | reverses |
| 11 | 50/40/10 | CaBr₂ | (500, 200° F) 34.5 bar, 93°C | did not test | viscous liquid |
| 12 | 50/25/25 | CaBr₂ | (500, 200° F) 34.5 bar, 93°C | failed at 93% (200° F) | |
| 13 | 40/20/40 (hom 5 min.) | CaBr₂ | (500, 200° F) 34.5 bar, 93°C | 15 ml/30 min. | reverses |
| | .. | | (500, 250° F) 34.5 bar, 121°C, | 6 ml/30 min. | |
| | '" | | (500, 300° F) 34.5 bar, 149°C | 11 ml/10 min. | |
| 14 | 40/20/40 (ho, 1 hr.) | CaBr₂ | (500, 200° F) 34.5 bar, 93°C | 59 ml/10 min. | |
| 15 | 33/33/33 | CaBr₂ | (500, 200° F) 34.5 bar, 93°C | 20 ml/30 min. | appears not reversible |
| | | | (500, 250° F) 34.5 bar, 121°C | 6 ml/30 min. | |
| | | | (500, 310° F) 34.5 bar,154°C | 6 ml/10 min. | |
| | *all gels made in water | were homog. | 1 hour* | | |
| | *all gels made in water | were homog. | 5 min., unless | Noted* | |

Though the AN/AAm/HEA performs well, it lacks the required long-term stability. The HEA protions of the gel will hydrolyze to acrylic acid in less than 24 hours at 121°C (250°F) The acrylic acid does not have the required solubility in the divalent brines and the polymer precipitates. As stated in U.S. Patent No. 5,035,812, vinyl lactams have excellent thermal stability even in the divalent brines, particulary calcium. The vinyl pyrrolidinone can be substituted for the HEA and increase the stability of the gel at 121°C (250°F) substantially. This is very important as the drilling fluid must continue to function for days at the elevated temperature.

In addition to performing at elevated temperatures, the material must also perform under the other system requirements such as shear. One way to accomplish having a material perform long-term under these conditions is to have the system modify the material to optimize its performance. Given an understanding of the material and the system, one skilled in the arts can accomplish this. For instance under shear simulation tests the gel material may break into smaller pieces. The rate of breakage is determined by the degree of crosslinking in the material. By adding materials with different amounts of crosslinker, see examples 8 through 11, the material changes under shear, but the performance remained unchanged during the duration of the test (see table below). The shear test was conducted on a multi-mixer (Fann Instruments) and the PPT was conducted at 34.5 bar (500 psi) and on a 20 *µ*m disc.

| Shear Time | 30 minute volume |
|---|---|
| Initial | 21 - 22 ml |
| 3 hours | 23 - 26 ml |
| 6 hours | 28 ml |

Adding materials of different crosslinking can also increase the scaling performance. For instance, adding a material with high crosslinking and a material with low crosslinking can create a system that acts a lot like the conventional materials, i.e., sized salt and HEC. The harder material, higher crosslinked material, will form a gross seal while the softer material, the lower crosslinked material, will form the fine seal. Both materials will still have the required reversing characteristics.

Examples of gels including vinyl pyrrolidinone follow.

### Example 8: Synthesis of Acrylonitrile/Acrylamide/1-Vinyl-2-Pyrrolidinone Gels.

9.95 grams of acrylamide (Aldrich, 99%) is allowed to idssolve in 145 ml H₂O. This solution is then placed in a separatory funnel and 18.57 grams (23.04 ml) of acrylonitrile (Aldrich, 99%) and 23.34 grams (22.44 ml) of 1-vinyl-2-pyrrolidinone (Aldrich, 99%) are added. To this the appropriate amount of methylenebisacrylamide (Aldrich, 99%) is added (see following table).

| Bis XL% of mM Conc. | Bis Solution (g/ml H₂O) | amount added |
|---|---|---|
| .01% | (.1 g/10 ml) | 1.08 ml |
| .05% | (.1 g/10 ml) | 5.40 ml |
| .50% | (.54 g/40 ml)* | add all |

| | | |
|---|---|---|
| *subtract 40 ml from initial H₂O amount | | |

N₂ is bubbled through the solution for 25 minutes. In a 20 dram glass vial, 0.374 grams of V-50 Azo initiator (Wako Chemicals USA, Inc.) is added to 12 ml of DI water and allowed to dissolve. 5.0 ml of the V-50 solution is then added to the aqueous solution and the solution is degassed for an additional 5 minutes. In a 500 ml baffled three necked reaction vessel, 300 ml of Norpar-12 (Exxon), with 1.5 g of Ganex V216 (ICI Americas, Inc.) is heated for approximately 3 hours. The Norpar is degassed during the final 55 minutes of heating, while being stirred with a three bladed A200 impeller, at 435 RPM. The aqueous solution is then added to the Norpar solution, which is still being stirred, and the reaction runs for 15-18 hours, at 60 - 70° C.

### Example 9: Testing Blocking Ability of Acrylontrile/ Acrylamide/1-Vinyl-2-Pyrrolidinone Gels.

The terpolymer beads synthesized in Example 8 are separated from the Norpar. These beads are then swollen in a pure or diluted CaCl₂ solution (11.6 lb/gallon) 1.39 kg/litre from Baroid Drilling Fluids, Inc.) for approximately 16 hours, stirring with an A-310 impeller at 400 - 500 rpm. These mixtures are then tested for blocking capability on 10, 20 and 35 *µ*m ceramic filters, using the Permeability Plugging Apparatus (PPA, Fann Instrument Company, Part No. 382020001). The procedure for testing is described in the earlier examples. The amount of filtrate that penetrates through the ceramic disc in 30 minutes is the test result. The following Table lists results for various combinations of beads, swollen in 647 g CaCl₂, along with results after shearing the particles on a multi-mixer for different periods of time. The results below hold for density ranges between 1.26 kg/litre (10.5 lb/gallon) to 1.38 kg/litre (11.5 lb/gallon).

| Trial No. | | Beads .01% | Beads .05% | Beads .5% | Disc Size | Shear Time | ml in 30 min |
|---|---|---|---|---|---|---|---|
| I | ratio | 100 | | | 20 µm | 0 | 10 -15 ml |
| | grams | 56 | | | | 1 hour | no control |
| II | ratio | | 100 | | 20 *µ*m | 0 | 40 ml |
| | grams | | 56 | | | 1 hour | 40 ml |
| | | | | | | 3 hours | no control |
| III | ratio | | | 100 | 20 µm | 0 | 100 ml/20 min |
| | grams | | | 56 | | 1 hour | 100 ml/20 min |
| | | | | | | 3 hours | 100 ml/20 min |
| IV | ratio | 30 | 30 | 40 | 10 µm | 0 | 9 ml |
| | grams | 17 | 17 | 22 | 20 µm | 0 | 18 - 22 ml |
| | | | | | | 1 hour | 23 - 26 ml |
| | | | | | | 3 hours | 23 - 26 ml |
| | | | | | | 6 hours | 26 - 28 ml |
| | | | | | 35 µm | 0 | 40 ml |

### Example 10: Testing Reversibility of Acrylonitrile/Acrylamide/1-Vinyl-2-Pyrrolidinone Gels.

The terpolymer is tested using the API filter press (Baroid Drilling Fluids, Inc.) for blocking capability. Approximately 250 ml of material is placed in the cell containing a 20 µm disc and 6.9 bar (100 psi) of pressure is applied. The amount of filtrate that penetrates through the ceramic disc in a specified period of time is the test result. The material is then removed and 6.9 bar (100 psi) of pressure is applied to assure the seal is still present on the ceramic disc. Water is then added to the cell and again 6.9 bar (100 psi)of pressure is applied. The table below lists the results. As shown the material loses its blocking capability when water is added.

| Trial No. | Disc Size | Initial Block (ml/30 min) | Reverse with H₂O (ml/min) |
|---|---|---|---|
| I | 20 µm | 20 ml | 520 ml/27 min |

### Example 11: Testing Thermal Stability of Acrylonitrile/Acrylamide/1-Vinyl-2-Pyrrolidinone Gels.

The terpolymer, swollen in CaCl₂ solution, is placed in a thermal pressure cell (Baroid Drilling Fluids, Inc.), at a selected temperature, for varying periods of time. In order to test thermal stability, the terpolymer is removed from the pressure cell and retested on the PPA, suing the procedure outline above. The Table below lists the results.

| Trial No. | Formulation of Material | Temps. | Time | Disc Size | ml in 30 min |
|---|---|---|---|---|---|
| I | 35/30/35 AN/Aam/VP | ambient | 0 days | 20 µm | 20 ml |
| | 0.1%BIS | 93 °C (200° F) | 2 days | 20 µm | 26 ml |
| | | 93°C (200° F) | 11 days | 20 µm | 20 ml |
| II | 50/20/30 AN/Aam/VP | ambient | 0 days | 20 µm | 15 ml |
| | .01% BIS | 93°C (200° F) | 4 days | 20 µm | - 40 ml |
| IV | 50/20/30 AN/Aam/VP | ambient | 0 days | 20 µm | 29 ml |
| | .01% BIS(30%); .05% BIS (70%) | 121°C (250° F) | 3 days | 20 µm | 34 ml |
| | | 121°C (250° F) | 7 days | 20 µm | 60 ml |
| V | 50/20/30 AN/Aam/VP | ambient | 0 days | 20 µm | 22 ml |
| | .01% BIS(30%); .05% BIS (30%) | 121°C (250° F) | 4 days | 20 µm | 26 ml |
| | .5% (40%) | 121°C (250°F) | 6 days. | 20 µm | 32 ml |

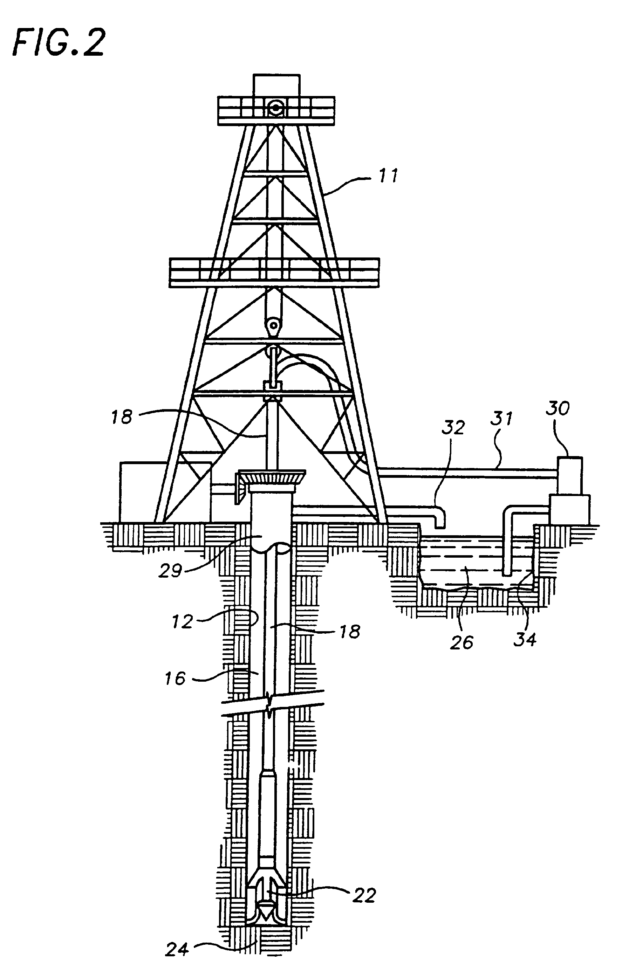

The well drilling methods of the invention are illustrated in Fig. 2. In Fig. 2, drilling rig 11 is disposed on top of a borehole 12. An annulus 16 is created between the borehole 12 and drill string 18. A drill bit 22 is disposed at the lower end of drill string 18 and carves the borehole 12 out of earth formations 24. A metal surface casing 29 is positioned in the bore hole 12 above the drill bit 22 for maintaining the integrity of the borehole 12 near the surface. The fluids 26 of the invention may be kept in a mud pit 34 and pumped by a pumping system 30 through a conduit 31 into the central axial passageway of the drill string 18. The fluid 26 exits the drill string 18 at the drill bit 22 and travels back up the annulus 16. The material then flows through a conduit 32 into the mud pit 34.

As discussed above, the fluid 26 will bridge pores in the earth formation 24 to prevent formation damage. When desired, a substance such as water or an aqueous solution of sodium chloride or potassium chloride is pumped out of the mud pit 34, through the drill string 18 and out through the bit 22 into the annulus 16 to lower the state of hydration of the polymer or crosslinked polymer fluid 26 so that it decreases in volume to remove the bridge and seal from the formation 24 to allow the flow of fluids from the formation into the borehole 12.

It is intended that all variations and modifications of the inventions set forth above be included within the scope of the appended claims.

## Claims

1. A process for forming a particulate non-polyampholite crosslinked polymer, whose particles expand or swell in a high concentration of ions and collapse in a lower concentration of ions, which process comprises forming an uncrosslinked polymer in particulate form which is soluble in ionic fluids and insoluble in water, and then crosslinking the polymer wherein the crosslinking is effected so as to maintain discretely-formed particles.

2. A process as claimed in claim 1 wherein the polymer is synthesised from a first monomer of a type which forms a hydrophobic homopolymer and a second monomer optionally with a third monomer, the second and third monomers being of a type which forms a hydrophilic homopolymer.

3. A process as claimed in claim 2 comprising 35mol% to 55mol% of a first monomer of a type which forms a hydrophobic homopolymer, 5mol% to 25mol% of a second monomer of a type which forms a hydrophilic homopolymer, and 30mol% to 50mol% of a third monomer of a type which forms a hydrophilic homopolymer, said third monomer being different from said second monomer.

4. A process as claimed in claim 2 or claim 3 wherein the first monomer comprises a nitrile containing compound which contains a double or triple bond capable of being polymerized, and wherein the second and third monomers independently comprise one or two acrylamides, substituted acrylamides or hydroxyacrylates having a double bond, triple bond or other functionality which can be polymerized.

5. A process as claimed in claim 4 wherein the first monomer is acrylonitrile, methacrylonitrile, maleonitrile or fumaronitrile.

6. A process as claimed in claim 4 or claim 5 wherein the second and third monomers independently are acrylamide, methyl acrylamide, dimethyl acrylamide, ethyl acrylamide, 2-hydroxyethyl acrylate, 2-hydroxypropyl acrylate, 2-hydroxyethylmethacrylate or 1-vinyl-2-pyrrolidinone.

7. A process as claimed in claim 6 wherein the first monomer is acrylonitrile, the second monomer is acrylamide and the third monomer is 2-hydroxyethylacrylate.

8. A process as claimed in any one of claims 1 to 7 wherein the uncrosslinked polymer is soluble in ionic fluids which comprise concentrated ionic fluids.

9. A process as claimed in any one of claims 1 to 8 wherein the particles are formed in the size range of 10-1000 µm.

10. A process as claimed in any one of claims 1 to 9 wherein the polymer is hydrated with an ionic fluid to form a gel.

11. A process as claimed in claim 10 wherein the ionic fluid comprises one or more divalent ions.

12. A process as claimed in claim 11 wherein the ionic fluid comprises calcium, magnesium or zinc ions.

13. A process as claimed in claim 12 wherein the ionic fluid comprises calcium chloride or calcium bromide.

14. A process as claimed in any one of claims 1 to 13
wherein the crosslinked polymer is adapted to collapse (become dehydrated) upon exposure to a change in environmental condition.

15. A process as claimed in claim 14 wherein the environmental condition is temperature, pH, solvent, solvent concentration, ions, ionic concentration, electric field, magnetic field or pressure.

16. A process as claimed in claim 14 in which the environmental condition is exposure to water or a dilute ionic fluid.

17. A process as claimed in claim 16 wherein the dilute ionic fluid is dilute sodium chloride, dilute potassium chloride or dilute ammonium chloride.

18. A well drilling method comprising:
introducing into an underground stratum during drilling a crosslinked polymer when formed by a process as claimed in any one of claims 1 to 17 wherein the polymer blocks the pores of the stratum; and
exposing the polymer to an environmental condition selected to lower the state of hydration of the polymer whereby the polymer decreases in volume to unblock the pores.

19. A method as claimed in claim 18 wherein the state of hydration of the polymer is lowered by pumping into the well a substance comprising water, sodium chloride solution, potassium chloride solution or ammonium chloride solution.

## Patentansprüche

1. Verfahren zur Bildung eines partikulären, vernetzten Nicht-Polyampholite-Polymers, dessen Partikel in einer hohen Ionenkonzentration expandieren oder anschwellen und in einer niedrigeren Ionenkonzentration kollabieren, welches Verfahren die Bildung eines nicht-vernetzten Polymers in partikulärer Form, welches in Ionenflüssigkeiten löslich und in Wasser unlöslich ist, und die anschließende Vernetzung des Polymers umfaßt, worin die Vernetzung so bewirkt wird, daß diskret-gebildete Partikel erhalten bleiben.

2. Verfahren nach Anspruch 1, worin das Polymer aus einem ersten Monomer von einem Typ, welcher ein hydrophobes Homopolymer bildet, und einem zweiten Monomer wahlweise mit einem dritten Monomer synthetisiert wird, wobei das zweite und das dritte Monomer von einem Typ sind, welcher ein hydrophiles Homopolymer bildet.

3. Verfahren nach Anspruch 2, umfassend 35 Mol% bis 55 Mol% eines ersten Monomers von einem Typ, welcher ein hydrophobes Homopolymer bildet, 5 Mol% bis 25 Mol% eines zweiten Monomers von einem Typ, welcher ein hydrophiles Homopolymer bildet, und 30 Mol% bis 50 Mol% eines dritten Monomers von einem Typ, welcher ein hydrophiles Homopolymer bildet, wobei das dritte Monomer von dem zweiten Monomer unterschiedlich ist.

4. Verfahren nach Anspruch 2 oder Anspruch 3, worin das erste Monomer eine Nitril enthaltende Verbindung umfaßt, welche eine polymerisierbare Doppel- oder Dreifachbindung enthält, und worin das zweite und das dritte Monomer unabhängig voneinander ein oder zwei Acrylamide, substituierte Acrylamide oder Hydroxyacrylate mit einer Doppelbindung, Dreifachbindung oder sonstigen Funktionalität umfassen, welche polymerisiert werden kann.

5. Verfahren nach Anspruch 4, worin das erste Monomer Acrylnitril, Methacrylnitril, Maleonitril oder Fumaronitril ist.

6. Verfahren nach Anspruch 4 oder Anspruch 5, worin das zweite und dritte Monomer unabhängig voneinander Acrylamid, Methylacrylamid, Dimethylacrylamid, Ethylacrylamid, 2-Hydroxyethylacrylat, 2-Hydroxypropylacrylat, 2-Hydroxyethylmethacrylat oder 1-Vinyl-2-pyrrolidinon sind.

7. Verfahren nach Anspruch 6, worin das erste Monomer Acrylnitril ist, das zweite Monomer Acrylamid ist und das dritte Monomer 2-Hydroxyethylacrylat ist.

8. Verfahren nach einem der Ansprüche 1 bis 7, worin das unvernetzte Polymer in Ionenflüssigkeiten, welche konzentrierte Ionenflüssigkeiten umfassen, löslich ist.

9. Verfahren nach einem der Ansprüche 1 bis 8, worin die Partikel im Größenbereich von 10-1000 µm gebildet werden.

10. Verfahren nach einem der Ansprüche 1 bis 9, worin das Polymer mit einer Ionenflüssigkeit hydratisiert wird, um ein Gel zu bilden.

11. Verfahren nach Anspruch 10, worin die Ionenflüssigkeit ein oder mehrere zweiwertige Ionen umfaßt.

12. Verfahren nach Anspruch 11, worin die Ionenflüssigkeit Calcium-, Magnesium- oder Zinkionen umfaßt.

13. Verfahren nach Anspruch 12, worin die Ionenflüssigkeit Calciumchlorid oder Calciumbromid umfaßt.

14. Verfahren nach einem der Ansprüche 1 bis 13, worin das vernetzte Polymer angepaßt ist um zu kollabieren (dehydratisiert zu werden), nachdem es einer Veränderung der Umgebungsbedingungen ausgesetzt war.

15. Verfahren nach Anspruch 14, worin es sich bei den Umgebungsbedingungen um Temperatur, pH-Wert, Lösungsmittel, Lösungsmittelkonzentration, Ionen, Ionenkonzentrationen, elektrisches Feld, Magnetfeld oder Druck handelt.

16. Verfahren nach Anspruch 14, worin es sich bei den Umgebungsbedingungen um das Aussetzen gegenüber Wasser oder einer verdünnten zonenflüssigkeit handelt.

17. Verfahren nach Anspruch 16, worin die verdünnte Ionenflüssigkeit verdünntes Natriumchlorid, verdünntes Kaliumchlorid oder verdünntes Ammoniumchlorid ist.

18. Bohrlochbohrverfahren umfassend:
Einführung eines vernetzten Polymers, das durch ein Verfahren nach einem der Ansprüche 1 bis 17 gebildet ist, in eine Untergrundschicht während des Bohrens, worin das Polymer die Poren der Schicht blockiert, und
Aussetzen des Polymers einer Umgebungsbedingung, die ausgewählt ist um den Hydratisierungszustand des Polymers zu verringern, wobei das Volumen des Polymers abnimmt um die Poren zu deblockieren.

19. Verfahren nach Anspruch 18, worin der Hydratisierungszustand des Polymers durch Einpumpen einer Substanz, umfassend Wasser, Natriumchloridlösung, Kaliumchloridlösung oder Ammoniumchloridlösung, in das Bohrloch verringert wird.

## Revendications

1. Procédé pour former un polymère particulaire réticulé par non-polyampholite dont les particules se dilatent ou se gonflent dans une concentration élevée d'ions et se dégonflent dans une concentration d'ions plus faible, lequel procédé consiste à former un polymère non réticulé sous une forme particulaire qui est soluble dans des fluides ioniques et insoluble dans l'eau et, ensuite, à réticuler le polymère, dans lequel la réticulation est effectuée de façon à maintenir des particules formées de façon distincte.

2. Procédé selon la revendication 1 dans lequel le polymère est synthétisé à partir d'un premier monomère d'un type qui forme un homopolymère hydrophobe et d'un deuxième monomère, facultativement, avec un troisième monomère, les deuxième et troisième monomères étant d'un type qui forme un homopolymère hydrophile.

3. Procédé selon la revendication 2 comprenant 35 mol % à 55 mol % d'un premier monomère d'un type qui forme un homopolymère hydrophobe, 5 mol % à 25 mol % d'un deuxième monomère d'un type qui forme un homopolymère hydrophile et 30 mol % à 50 mol % d'un troisième monomère d'un type qui forme un homopolymère hydrophile, ledit troisième monomère étant différent dudit deuxième monomère.

4. Procédé selon la revendication 2 ou la revendication 3 dans lequel le premier monomère comprend un composé à base de nitrile, lequel contient une double ou une triple liaison capable d'être polymérisée, et dans lequel les deuxième et troisième monomères comportent, de façon indépendante, un ou deux acrylamides, des acrylamides substitués ou des hydroxyacrylates ayant une double liaison, une triple liaison ou une autre fonctionnalité qui peut être polymérisée.

5. Procédé selon la revendication 4 dans lequel le premier monomère est de l'acrylonitrile, du méthacrylonitrile, du maléonitrile ou du fumaronitrile.

6. Procédé selon la revendication 4 ou la revendication 5 dans lequel les deuxième et troisième monomères sont, de façon indépendante, un acrylamide, un méthylacrylamide, un diméthylacrylamide, un éthylacrylamide, du 2-hydroxyéthylacrylate, du 2-hydroxypropylacrylate, du 2-hydroxyéthylméthacrylate ou du 1-vinyl-2-pyrrolidinone.

7. Procédé selon la revendication 6 dans lequel le premier monomère est un acrylonitrile, le deuxième monomère est un acrylamide et le troisième monomère est du 2-hydroxyéthylacrylate.

8. Procédé selon l'une quelconque des revendications 1 à 7 dans lequel le polymère non réticulé est soluble dans des fluides ioniques qui comportent des fluides ioniques concentrés.

9. Procédé selon l'une quelconque des revendications 1 à 8 dans lequel les particules sont formées dans la plage de dimensions de 10 à 1000 µm.

10. Procédé selon l'une quelconque des revendications 1 à 9 dans lequel le polymère est hydraté avec un fluide ionique pour former un gel.

11. Procédé selon la revendication 10 dans lequel le fluide ionique comporte un ion bivalent.

12. Procédé selon la revendication 11 dans lequel le fluide ionique comprend des ions de calcium, de magnésium ou de zinc.

13. Procédé selon la revendication 12 dans lequel le fluide ionique comprend du chlorure de calcium ou du bromure de calcium.

14. Procédé selon l'une quelconque des revendications 1 à 13 dans lequel le polymère réticulé est adapté pour se dégonfler (se déshydrater) lors d'une exposition à une modification d'une situation environnementale.

15. Procédé selon la revendication 14 dans lequel la situation environnementale est la température, le pH, un solvant, une concentration de solvant, des ions, une concentration ionique, un champ électrique, un champ magnétique ou une pression.

16. Procédé selon la revendication 14 dans lequel la situation environnementale est une exposition à l'eau ou à un fluide ionique dilué.

17. Procédé selon la revendication 16 dans lequel le fluide ionique dilué est du chlorure de sodium dilué, du chlorure de potassium dilué ou du chlorure d'ammonium dilué.

18. Procédé de forage de puits consistant à :
introduire dans une strate géologique pendant un forage un polymère réticulé lorsque formé par un procédé selon l'une quelconque des revendications 1 à 17, dans lequel le polymère bloque les pores de la strate ; et
exposer le polymère à une situation environnementale sélectionnée pour abaisser l'état d'hydratation du polymère de façon que le polymère décroisse en volume pour débloquer les pores.

19. Procédé selon la revendication 18 dans lequel l'état d'hydratation du polymère est abaissé par pompage dans le puits d'une substance comprenant l'eau, une solution de chlorure de sodium, une solution de chlorure de potassium ou une solution de chlorure d'ammonium.
